# EUROPEAN PATENT APPLICATION

(11) **EP 4 539 134 A1**
(43) Date of publication of application: **16.04.2025**
(21) Application number: 24205455.9
(22) Date of filing: 09.10.2024
(51) Int. Cl.: H01M 4/04, H01M 4/133, H01M 4/134, H01M 4/1393, H01M 4/1395, H01M 4/38, H01M 4/583, H01M 4/62, H01M 10/0525

(54) **BINDER FOR RECHARGEABLE LITHIUM BATTERY AND RECHARGEABLE LITHIUM BATTERY INCLUDING THE BINDER**

(30) Priority: 11.10.2023 KR 20230134849
(71) Applicant: SAMSUNG SDI CO., LTD., Yongin-si, Gyeonggi-do 17084 (KR)
(72) Inventor: LEE, Kuk Joo, 16678 Suwon-si (KR); CHOI, Je Won, 16678 Suwon-si (KR); CHO, Yun Shik, 16678 Suwon-si (KR); JUNG, Kyung Hwa, 16678 Suwon-si (KR); CHO, Min Ho, 16678 Suwon-si (KR); PARK, Su Jin, 16678 Suwon-si (KR)
(74) Representative: Michalski Hüttermann & Partner Patentanwälte mbB

(57) **Abstract**

A binder for rechargeable lithium batteries and a rechargeable lithium battery including the binder are disclosed. The binder for rechargeable lithium batteries includes a unit derived from a (meth)acrylic monomer containing a carboxylic acid group or a carboxylic acid metal salt as a first monomer; a unit derived from a (meth)acrylic monomer containing an amide group or a nitrile group as a second monomer; and a unit derived from a Zwitterionic vinyl or (meth)acrylic monomer as a third monomer.

## Description

### Cross-Reference to Related Application

The present application claims the benefit of priority from Korean Patent Application No. 10-2023-0134849, filed on October 11, 2023 in the Korean Intellectual Property Office, the entire disclosure of which is incorporated herein by reference.

### Field of the Invention

The present invention relates to a binder for rechargeable lithium batteries and a rechargeable lithium battery including the same.

### Description of the Related Art

Demand for high energy density and high capacity batteries is growing with the rapid spread of electronic devices using batteries, such as, e.g., mobile phones, notebook computers, electric vehicles, and the like. Rechargeable lithium batteries are considered a power source for mobile devices due to, e.g., the light weight and high energy density thereof.

A rechargeable lithium battery typically includes a positive electrode and a negative electrode which contains active materials allowing intercalation and deintercalation of lithium ions, and an electrolyte, and produces electricity through oxidation and reduction upon intercalation/deintercalation of the lithium ions at the positive electrode and the negative electrode.

A positive electrode material for rechargeable lithium batteries typically includes transition metal compounds, such as lithium cobalt oxide, lithium nickel oxide, lithium manganese oxide, and the like. A negative electrode material typically includes crystalline carbon materials, such as natural graphite or artificial graphite, or amorphous carbon materials.

As part of efforts to improve performance of such rechargeable lithium batteries, cells capable of being rapidly charged are developed. In general, rapid charging has a disadvantage in the reduction of cell capacity through reduction in cell lifespan. To address such a disadvantage includes developing materials and cell design capable of reducing internal resistance, and to develop a low resistance binder for electrodes.

### Summary of the Invention

An aspect of the present disclosure includes a binder for rechargeable lithium batteries that can realize an active material layer with high adhesive strength to a current collector while reducing electrical resistance.

Another aspect of the present disclosure includes a rechargeable lithium battery that includes a negative electrode including the binder for rechargeable lithium batteries and a positive electrode.

A further aspect of the present disclosure includes a rechargeable lithium battery that includes a positive electrode including the binder for rechargeable lithium batteries and a negative electrode.

One aspect of the present disclosure includes a binder for rechargeable lithium batteries.

The binder for rechargeable lithium batteries includes a unit derived from a (meth)acrylic monomer containing a carboxylic acid group or a carboxylic acid metal salt as a first monomer; a unit derived from a (meth)acrylic monomer containing an amide group or a nitrile group as a second monomer, and a unit derived from a Zwitterionic vinyl or (meth)acrylic monomer as a third monomer.

Another aspect of the present disclosure includes a rechargeable lithium battery that includes a negative electrode including the binder for rechargeable lithium batteries and a positive electrode.

A further aspect of the present disclosure includes a rechargeable lithium battery that includes a positive electrode including the binder for rechargeable lithium batteries and a negative electrode.

Example embodiments of the present disclosure include a negative electrode or positive electrode for rechargeable lithium batteries, the negative or positive electrode including an active material layer that can realize an active material layer with high adhesive strength to a current collector while reducing electrical resistance, and a rechargeable lithium battery including the binder.

### Brief Description of the Drawings

FIG. 1 to FIG. 4 are schematic cross-sectional views of rechargeable lithium batteries according to example embodiments.
FIG. 5 illustrates a method for measurement of adhesive strength in an experimental example.

### Detailed Description of the Invention

Hereinafter, example embodiments will be described in detail with reference to the accompanying drawings. However, it should be understood that the following example embodiments are provided by way of illustration and the present disclosure is defined only by the appended claims and equivalents thereto.

The terminology used herein is for the purpose of describing example embodiments and is not intended to be limiting of the example embodiments. Throughout the specification, unless specified otherwise, each element may be singular or plural.

Herein, "combinations thereof" may refer to mixtures, stacks, composites, copolymers, alloys, blends, and reaction products of components.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the drawings, thicknesses of various elements, layers, regions and the like may be exaggerated for clarity of illustration and the same elements are denoted by like reference numerals throughout the specification. In addition, when an arbitrary element is referred to as being disposed (or located or positioned) "above" (or "below") or "on" (or "under") a component, it may mean that the arbitrary element is placed in contact with the upper (or lower) surface of the component and may also mean that another component may be interposed between the component and any arbitrary element disposed (or located or positioned) on (or under) the component.

Herein, "layer" includes not only a feature formed on the entire surface but also a feature formed on a surface in planar view.

Herein, "average particle diameter" may be measured by any method well known to those skilled in the art, for example, by a particle diameter analyzer, transmission electron micrographs, or scanning electron micrographs. Alternatively, the average particle diameter may be measured by counting the number of particles in each particle diameter range using a device employing a dynamic light-scattering method to analyze data, followed by calculating the average particle diameter based on the analyzed data. The average particle diameter may be measured from microscopic images or measured with a particle diameter analyzer and can be defined as the diameter of particles with a cumulative volume of 50 volume% in the particle diameter distribution.

Herein, "or" should not be construed as exclusive. For example, "A or B" is construed to include A, B, A+B, and the like.

Herein, "substituted or unsubstituted" may mean that at least one hydrogen atom in the corresponding functional group is substituted with a hydroxyl group, a C₁ to C₁₀ alkyl group, a C₁ to C₁₀ halo-alkyl group, a C₃ to C₁₀ cycloalkyl group, a C₆ to C₁₀ aryl group, a (meth)acryloyl group, or a (meth)acryloyloxy group.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

Hereinafter, example embodiments of the present invention will be described in detail. However, it should be understood that the following example embodiments are provided by way of illustration only and the present disclosure is defined only by the appended claims and equivalent thereto.

### Binder for rechargeable lithium batteries

A binder for rechargeable lithium batteries according to an example embodiment includes a unit derived from a (meth)acrylic monomer containing at least one of a carboxylic acid group as a first monomer; a unit derived from a (meth)acrylic monomer containing an amide group or a nitrile group as a second monomer; and a unit derived from a Zwitterionic vinyl or (meth)acrylic monomer as a third monomer.

A binder including only the unit derived from the first monomer and the unit derived from the second monomer can increase adhesive strength of an active material layer to a current collector. However, such a binder may not sufficiently improve the electrical resistance of the active material layer. A binder further including the unit derived from the third monomer can improve electrical resistance by increasing the degree of transfer of lithium ions, as compared with a binder having only the unit derived from the third monomer, while securing sufficient adhesive strength.

According to an example embodiment, the binder may include the unit derived from the first monomer; the unit derived from the second monomer; and the unit derived from the third monomer.

A binder composed of the unit derived from the first monomer and the unit derived from the third monomer, and a binder composed of the unit derived from the second monomer and the unit derived from the third monomer are insoluble in water, making it difficult to form an active material layer, and have a too low viscosity to form a desired active material layer. Although the binder including only the third monomer can increase the degree of transfer of lithium ions, this binder is also insoluble in water or has a too low viscosity to form a desired active material layer.

The binder according to an example embodiment may consist of the unit derived from the first monomer; the unit derived from the second monomer; and the unit derived from the third monomer.

In an example embodiment, the binder may be or include a copolymer of a monomer mixture including the first monomer, the second monomer, and the third monomer.

In an example embodiment, the third monomer may be present in an amount of about 2 wt% to 45 wt% in the monomer mixture. Within this range, the binder can increase adhesive strength of the active material layer to the current collector while reducing electrical resistance. For example, the third monomer may be present in an amount of about 2 wt% to 15 wt%, about 5 wt% to 35 wt%, about 10 wt% to 35 wt%, about 10 wt% to 30 wt%, or about 10 wt% to 30 wt%. Within this range, the binder can have the above effects and suitable viscosity, thereby facilitating formation of an active material layer.

The binder may have a viscosity of about 450 cP to 6500 cP in an aqueous solution at a concentration of about 4 wt% to about 15 wt%, for example, about 8.5 wt% to 15 wt%, or about 8.5 wt% to 10 wt%. Within any of the above ranges, the binder can facilitate formation of the active material layer through application of binder slurries. As used herein, "viscosity" may be measured using a rheometer at about 25°C. In an example, the binder has a viscosity of about 1,000 cP to 5,000 cP. Within this range, the binder can secure good processability in formation of the active material layer.

The binder may further include a lithium salt. The lithium salt may be bound to the Zwitterionic functional group to facilitate migration of lithium ions. The lithium salt may include at least one of LiCl, LiPF₆, LiTFSI, LiFSI, LiBF₄, LiClO₄, and the like, without being limited thereto.

Next, the monomers will be described in more detail.

As the first monomer, the (meth)acrylic monomer containing a carboxylic acid group (-COOH) may include acrylic acid and/or methacrylic acid. The first monomer may also contain a carboxylic acid metal salt (for example, -C(=O)-O⁻Li⁺) of an anion of the carboxylic acid group and a monovalent metal cation (for example, Li⁺).

In an example embodiment, the first monomer may be present in an amount of about 25 wt% to 55 wt% in the monomer mixture. Within this range, the binder can have suitable viscosity to facilitate formation of the active material layer while securing improvement in adhesive strength thereof. For example, the first monomer may be present in an amount of about 25 wt% to 50 wt%, about 30 wt% to 50 wt%, about 30 wt% to 45 wt%, about 30 wt% to 48 wt%, or about 35 wt% to 50 wt%.

As the second monomer, at least one or two types of the (meth)acrylic monomer containing an amide group or a nitrile group may be present in the monomer mixture.

The (meth)acrylic monomer containing an amide group may include at least one of (meth)acrylamide, N-monoalkyl (meth)acrylamide, N,N-dialkyl (meth)acrylamide, and N,N-dialkyl (meth)acrylamide. Herein, "alkyl" refers to a C₁ to C₅ alkyl group and may include at least one of a methyl group, an ethyl group, a propyl group, for example, an N-propyl group, a butyl group, for example, an N-butyl group, and the like.

The (meth)acrylic monomer containing a nitrile group may be or include (meth)acrylonitrile or the like.

In an example embodiment, the second monomer may be present in an amount of about 25 wt% to 50 wt% in the monomer mixture. Within this range, the binder can have suitable viscosity to facilitate formation of the active material layer while securing improvement in adhesive strength thereof. For example, the second monomer may be present in an amount of about 30 wt% to 50 wt%, about 35 wt% to 50 wt%, about 40 wt% to 50 wt%, or about 40 wt% to 50 wt%.

In an example embodiment, the second monomer may be or include a (meth)acrylic monomer containing an amide group alone. In another example embodiment, the second monomer may be or include a (meth)acrylic monomer having a nitrile group alone.

As the third monomer, the Zwitterionic vinyl or (meth)acrylic monomer may be or include a monomer having both cationic and anionic functional groups therein and having at least one of a vinyl group or a (meth)acryl group for polymerization with the first monomer and the second monomer.

The cationic functional group is or includes a functional group that exhibits a monovalent or polyvalent positive charge in an aqueous solvent, and may include, for example, at least one of substituted or unsubstituted ammonium cations (NH₄⁺), imidazolium cations, pyrazolium cations, pyridinium cations, piperidinium cations, piperazinium cations, sulfide cations (-S⁺RR₁), naphthalenium cations, guanidinium cations, and the like, without being limited thereto. For example, the cationic functional group may be a substituted or unsubstituted ammonium cation or imidazolium cation. Here, R and R¹ are each independently hydrogen or a C₁ to C₁₀ alkyl group.

The anionic functional group may be or include a functional group that exhibits a monovalent or polyvalent negative charge in an aqueous solvent, for example, a functional group having at least one of sulfur (S), nitrogen (N), carbon (C), phosphorus (P), and oxygen (O). For example, the anionic functional group may be -SO₃⁻, -CO₂⁻, -O⁻-, -NR⁻, -R₁-O-(P=O)O⁻-O-R₂⁻-, or the like. Here, R may be or include a substituted or unsubstituted C₁ to C₁₀ alkyl group or C₁ to C₁₀ halo-alkyl group, or R₁ and R₂ may be or include each independently a substituted or unsubstituted C₁ to C₁₀ alkylene group or a substituted or unsubstituted C₂ to C₁₀ alkenylene group.

In an example embodiment, the third monomer may include at least one of a sulfobetaine monomer, a phosphobetaine monomer, a carboxybetaine monomer, and an imidazolium monomer.

In an example embodiment, the sulfobetaine monomer may be represented by Formula 1: 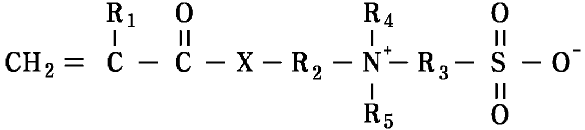
where R₁ is hydrogen or a methyl group;
X is O or NH;
R₂ and R₃ are each independently a substituted or unsubstituted C₁ to C₁₀ alkylene group, a substituted or unsubstituted C₆ to C₁₀ arylene group, or a substituted or unsubstituted C₇ to C₁₀ arylalkylene group; and
R₄ and R₅ are each independently hydrogen or a substituted or unsubstituted C₁ to C₁₀ alkyl group.

In an example embodiment, the sulfobetaine monomer may include at least one of compounds represented by Formulas 1-1 to 1-8:

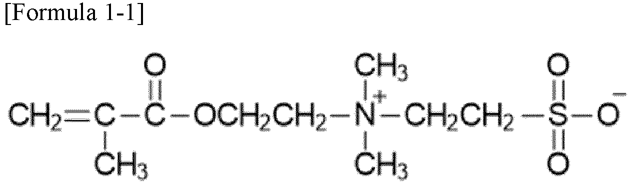

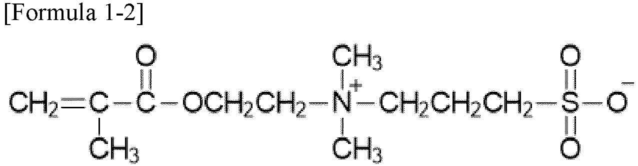

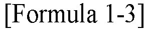

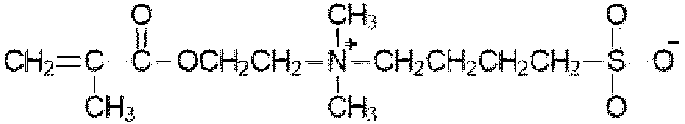

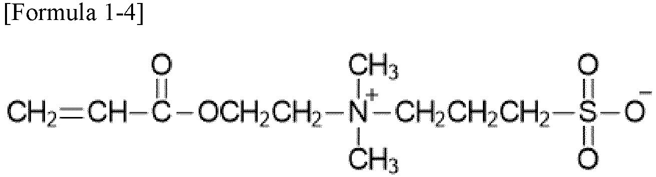

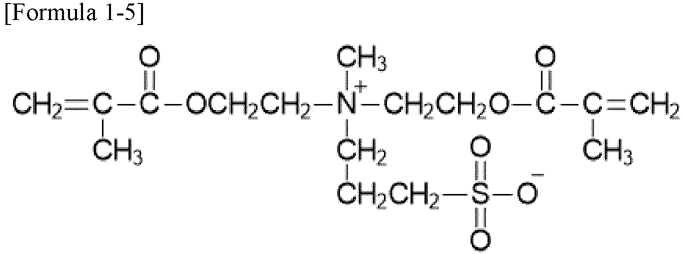

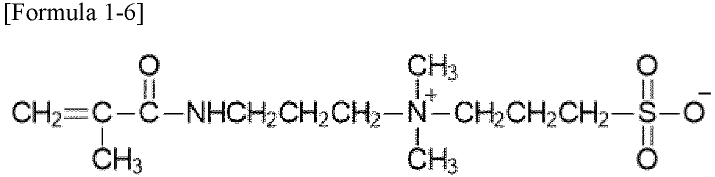

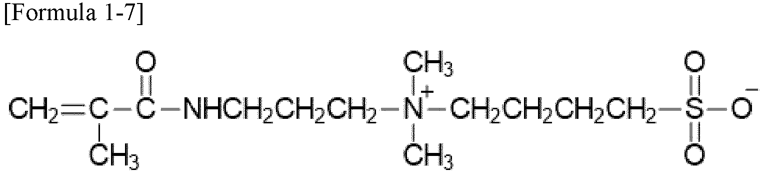

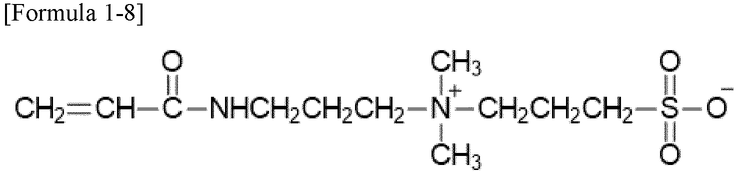

In an example embodiment, the phosphobetaine monomer may be represented by Formula 2: 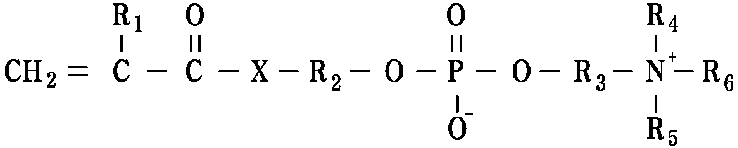
where R₁ is hydrogen or a methyl group;
X is O or NH;
R₂ and R₃ are each independently a substituted or unsubstituted C₁ to C₁₀ alkylene group, a substituted or unsubstituted C₆ to C₁₀ arylene group, or a substituted or unsubstituted C₇ to C₁₀ arylalkylene group; and
R₄, R₅, and R₆ are each independently hydrogen or a substituted or unsubstituted C₁ to C₁₀ alkyl group.

In an example embodiment, the phosphobetaine monomer may be represented by Formula 2-1:

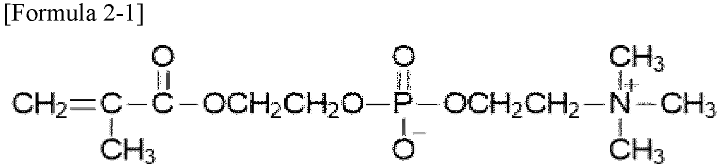

In an example embodiment, the carboxybetaine monomer may be represented by Formula 3: 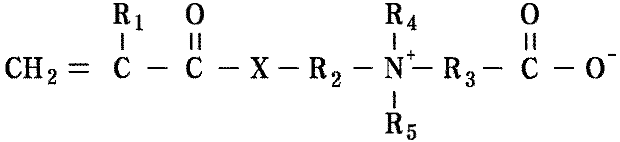
where R₁ is hydrogen or a methyl group;
X is O or NH;
R₂ and R₃ are each independently a substituted or unsubstituted C₁ to C₁₀ alkylene group, a substituted or unsubstituted C₆ to C₁₀ arylene group, or a substituted or unsubstituted C₇ to C₁₀ arylalkylene group; and
R₄ and R₅ are each independently hydrogen or a substituted or unsubstituted C₁ to C₁₀ alkyl group.

In an example embodiment, the carboxybetaine monomer may include at least one of compounds represented by Formulas 3-1 to 3-3:

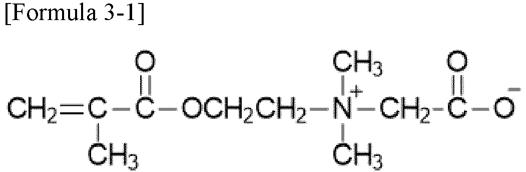

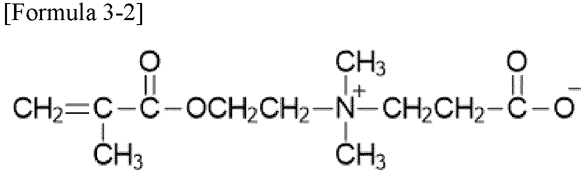

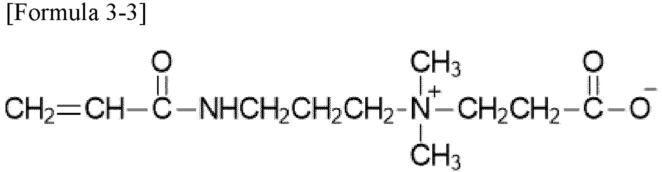

In an example embodiment, the imidazolium monomer may be represented by Formula 4: 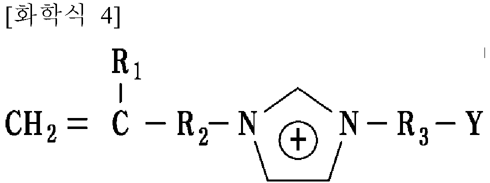
(where,
R₁ is hydrogen or a methyl group;
R₂, R₃ is each independently single bond, a substituted or unsubstituted C₁ to C₁₀ alkylene group, a substituted or unsubstituted C₆ to C₁₀ arylene group, or a substituted or unsubstituted C₇ to C₁₀ arylalkylene group,
Y is CO₂⁻, SO₃⁻ or PO₄⁻).

In an example embodiment, the imidazolium monomer may include at least one of compounds represented by Formulas 4-1 to 4-4:

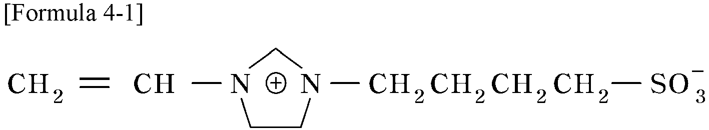

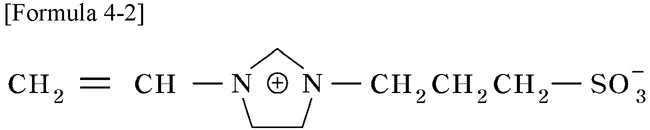

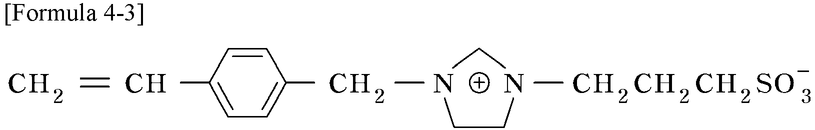

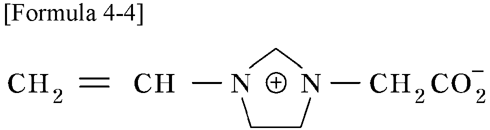

In an example embodiment, the third monomer may include at least one of compounds represented by Formulas 5-1 to 5-19:

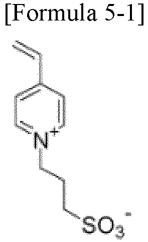

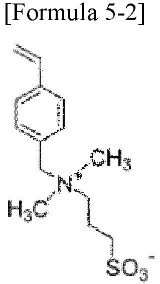

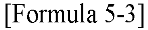

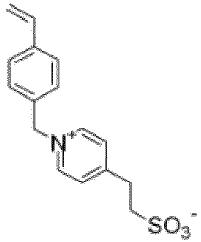

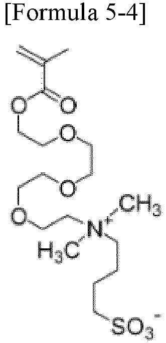

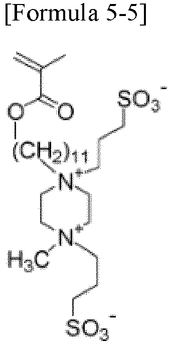

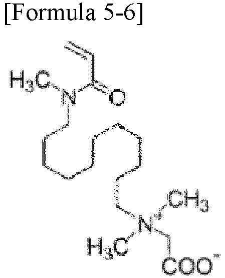

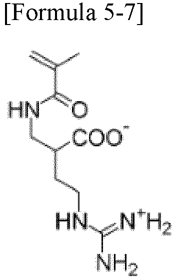

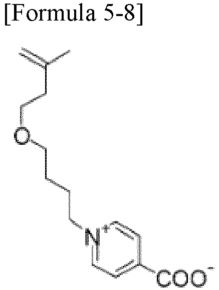

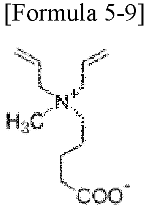

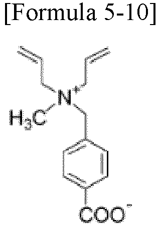

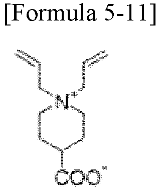

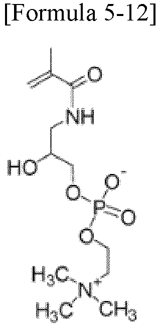

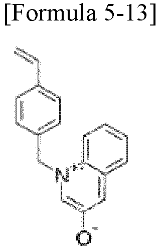

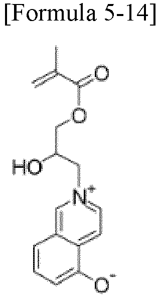

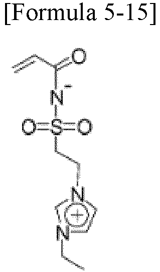

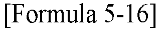

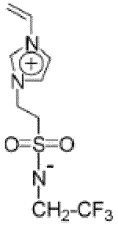

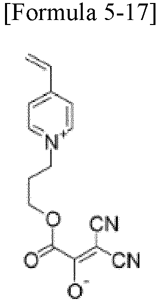

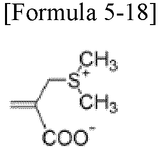

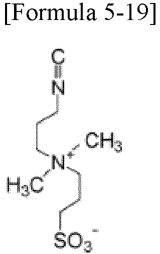

In an example embodiment, the monomer mixture may include, as the third monomer, at least one of compounds represented by Formulas 1-1 to 1-8, 2-1, 3-1 to 3-3, 4-1 to 4-4, and 5-1 to 5-19.

In an example embodiment, the first monomer, the second monomer, and the third monomer may be present in a total amount of about 99.5 wt%, for example, about 99.5 wt% to 100 wt%, or about 100 wt%, in the monomer mixture. Within any of the above ranges, the binder can easily achieve the effects thereof.

According to an example embodiment, the binder may be or include an aqueous binder. Accordingly, the binder can be suitably applied to a negative electrode or a positive electrode.

The binder according to an example embodiment may be prepared by polymerizing the monomer mixture by any typical method known to those skilled in the art. Polymerization may be realized by emulsion polymerization, suspension polymerization, solution polymerization, or the like.

In the polymerization, an emulsifier may include at least one of alkali salts of higher fatty acids, N-acryl amino acid salts, alkyl ether carbonates, acylated peptides, alkyl sulfonates, alkyl benzene sulfonates, alkyl amino acid salts, alkyl naphthalene sulfonates, sulfosuccinates, sulfonated oil, alkyl sulfates, alkyl ether sulfates, alkyl aryl ether sulfates, alkyl amide sulfates, alkyl phosphates, alkyl ether phosphates, alkyl aryl ether phosphates, and combinations thereof. In an example embodiment, the emulsifier may be or include sodium dodecylbenzene sulfonate. The alkyl group may be an alkyl group having a carbon number of 1 to 20.

In the polymerization, an initiator may be or include an azo compound initiator, such as at least one of azobisisobutyronitrile, ammonium persulfate, potassium persulfate, hydrogen peroxide, t-butylhydroperoxide, or a combination thereof.

The emulsifier may be present in an amount of about 0.1 parts by weight to 3 parts by weight, or about 0.1 parts by weight 2 parts by weight, relative to 100 parts by weight of the monomer mixture. Within any of the above ranges, the emulsifier can further improve adhesive strength and can secure good dispersion to provide a binder having a suitable size.

The initiator may be present in an amount of about 0.1 parts by weight to 3 parts by weight, or about 0.1 parts by weight to 2 parts by weight, relative to 100 parts by weight of the monomer mixture.

The binder may have a weight average molecular weight (Mw) of about 20,000 g/mol to 2,500,000 g/mol, for example, about 50,000 g/mol to 1,500,000 g/mol. Within this range, the binder can be applied to the active material layer. Herein, "weight average molecular weight" may be obtained through, e.g., gel permeation chromatography using a polystyrene standard.

The binder may be used as a positive electrode binder for rechargeable lithium batteries and/or a negative electrode binder for rechargeable lithium batteries.

### Negative electrode

A negative electrode for rechargeable lithium batteries includes the binder described above.

The negative electrode for rechargeable lithium batteries according to an example embodiment includes a current collector and a negative electrode active material layer formed on the current collector. The negative electrode active material layer includes a negative electrode active material and the above binder, and may further include a conductive material.

For example, the negative electrode active material layer may include about 90 wt% to 99 wt% of the negative electrode active material, about 0.5 wt% to 5 wt% of the binder, and about 0 wt% to 5 wt% of the conductive material.

The negative electrode active material includes at least one of a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include at least one of a carbon-based negative electrode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, at least one of soft carbon, hard carbon, mesoporous pitch carbides, calcined coke, and the like.

As the lithium metal alloy, an alloy of lithium and a metal that is at least one of Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be or include at least a Si-based negative electrode active material or a Sn-based negative electrode active material. The Si-based negative electrode active material may be or include at least one of silicon, a silicon-carbon composite, SiOₓ (0<x<2), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based negative electrode active material may be or include at least Sn, SnO₂, an Sn alloy, or a combination thereof.

The silicon-carbon composite may be or include a composite of silicon and amorphous carbon. According to an example embodiment, the silicon-carbon composite may be prepared in the form of silicon particles having an amorphous carbon coating formed on the surface thereof. For example, the silicon-carbon composite may include secondary particles (cores) composed of or including primary silicon particles, and an amorphous carbon coating layer (shell) formed on the surface of the second secondary particle. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based negative electrode active material or the Sn-based negative electrode active material may be used in combination with the carbon-based negative electrode active material.

The conductive material may be configured to impart conductivity to the electrodes, and may be any electrically conductive material that does not cause chemical change in cells under construction. In an example embodiment, the conductive material may include, for example, carbon materials, such as at least one of natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; or mixtures thereof.

The negative electrode current collector may be or include at least one of copper foil, nickel foil, stainless steel foil, titanium foil, nickel foam, copper foam, a conductive metal-coated polymer base, and combinations thereof.

The negative electrode may include the above binder alone as a binder. With the above binder alone, the negative electrode can secure low resistance and high adhesive strength.

The negative electrode may further include an additional binder other than the above binder so long as the additional binder does not impair the effects of the above binder. For convenience, the above binder will be referred to as a first binder and the binder other than the negative electrode binder will be referred to as a second binder.

The second binder may be or include at least one of a non-aqueous binder, an aqueous binder, a dry binder, or a combination thereof.

The non-aqueous binder may be or include at least one of polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the negative electrode binder, a cellulose-based compound capable of imparting viscosity may be further included. The cellulose-based compound may be or include a mixture of carboxymethylcellulose, hydroxypropyl methylcellulose, methylcellulose, or an alkali metal salt thereof. The alkali metal may be or include Na, K, or Li.

The dry binder may be or include a fibrous polymeric material and may be or include, for example, at least one of polytetrafluoroethylene, polyvinylidene fluoride, a polyvinylidene fluoride-hexafluoropropylene copolymer, polyethylene oxide, or a combination thereof.

When the slurry has low viscosity, a thickening agent may be added thereto to facilitate a coating process on the current collector. The thickening agent may include at least one of , for example, carboxymethyl cellulose, carboxyethyl cellulose, ethyl cellulose, hydroxymethyl cellulose, hydroxyethyl cellulose, hydroxypropyl cellulose, or polyvinyl alcohol. When the negative electrode active material layer further includes a conductive material, the negative electrode active material layer may include about 90 wt% to 98 wt% of the negative electrode active material, about 1 wt% to 5% of the binder, and about 1 wt% to 5% of the thickening agent.

The conductive material serves to impart conductivity to the electrodes and may be or include any electrically conductive material that does not cause chemical changes in cells under construction. The conductive material may include, for example, carbon materials, such as at least one of natural graphite, artificial graphite, carbon black, acetylene black, Ketjen black, carbon fiber, and the like; metal-based materials in the form of metal powders or metal fibers containing copper, nickel, aluminum, silver, and the like; conductive polymers, such as polyphenylene derivatives and the like; and mixtures thereof. The negative electrode material layer may include about 90 wt% to 98 wt% of the negative electrode active material, about 1 wt% to 5 wt% of the binder, and about 1 wt% to 5 wt% of the conductive material.

The dispersant may be or include any dispersants capable of improving dispersibility of the negative electrode material and the conductive material in the slurry. The dispersant may be or include at least one of cationic, anionic, or nonionic dispersants and may include at least one of a C₅ to C₂₀ hydrocarbon having 5 to 20 carbon atoms at a lipophilic portion thereof, an acrylic oligomer, an ethylene oxide oligomer, a propylene oxide oligomer, an ethylene oxide/propylene oxide oligomer, and a urethane oligomer.

The current collector may be or include at least one of copper foil, nickel foil, stainless steel foil, titanium foil, nickel foam, copper foam, a conductive metal-coated polymer base, and combinations thereof.

### Positive electrode

The positive electrode for rechargeable lithium batteries includes the binder described above.

The positive electrode for rechargeable lithium batteries according to one embodiment may include a current collector and a positive electrode active material layer formed on the current collector. The positive electrode active material layer may include a positive electrode active material and the above binder. The positive electrode material active layer may further include a conductive material.

In one embodiment, the positive electrode may further include an additive capable of acting as a sacrificial positive electrode.

The positive electrode active material may be present in an amount of 90 wt% to 99.5 wt% based on 100 wt% of the positive electrode active material layer and each, or at least one, of the binder and the conductive material may be present in an amount of 0.5 wt% to 5 wt% based on 100 wt% of the positive electrode material layer.

As a positive electrode material, a compound allowing reversible intercalation and deintercalation of lithium (lithiated intercalation compound) may be used. In an example embodiment, the positive electrode material may be at least one complex oxide of a metal selected from among cobalt, manganese, nickel, and combinations thereof with lithium.

The composite oxide may be or include a lithium transition metal composite oxide. In an example embodiment, the composite oxide may be or include a lithium nickel oxide, a lithium cobalt oxide, a lithium manganese oxide, a lithium iron phosphate compound, a cobalt-free lithium manganese oxide, or a combination thereof.

By way of example, the composite oxide may be or include a compound represented by any one of the following formulas: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001<b<0.1); LiₐCoG_{b}O₂(0.90≤a≤1.8, 0.001<b<0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above formula, A is or includes Ni, Co, Mn, or a combination thereof; X denotes Al, Ni, Co, Mn, Cr, Fe, Mg, Sr, V, a rare-earth element, or a combination thereof; D is or includes O, F, S, P, or a combination thereof; G is or includes Al, Cr, Mn, Fe, Mg, La, Ce, Sr, V, or a combination thereof; L¹ is or includes Mn, Al, or a combination thereof.

In an example embodiment, the positive electrode active material may be or include a high nickel-content positive electrode material containing about 80 mol% or more, about 85 mol% or more, about 90 mol% or more, about 91 mol% or more, or about 94 mol% to 99 mol% of nickel based on 100 mol% of metals, excluding lithium in the lithium transition metal composite oxide. The high nickel-content positive electrode active material can realize high capacity and thus can be applied to high capacity/high density rechargeable lithium batteries.

The conductive material may be configured to impart conductivity to the electrodes and may be or include any electrically conductive material that does not cause chemical change in cells under construction. The conductive material may include, for example, carbon materials, such as at least one of natural graphite, artificial graphite, carbon black, acetylene black, Ketjen black, carbon fiber, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

The current collector may be or include Al and the like, without being limited thereto.

The positive electrode may include the above binder alone as a binder. Even with the binder alone, the positive electrode can secure low resistance and high adhesive strength.

The positive electrode may further include an additional binder other than the above binder so long as the additional binder does not impair the effects of the above binder. For convenience, the above binder will be referred to as the first binder and the binder other than the negative electrode binder will be referred to as a third binder.

The third binder may include, for example, at least one of polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

### Rechargeable lithium battery

A rechargeable lithium battery according to an example embodiment includes a negative electrode including the binder for rechargeable lithium batteries; a positive electrode; and an electrolyte.

A rechargeable lithium battery according to another example embodiment includes a positive electrode including the binder for rechargeable lithium batteries; a negative electrode; and an electrolyte.

A rechargeable lithium battery according to a further example embodiment includes a positive electrode including the binder for rechargeable lithium batteries; a negative electrode including the binder for rechargeable lithium batteries; and an electrolyte.

### Electrolyte

The electrolyte includes at least one of a non-aqueous organic solvent and a lithium salt.

The non-aqueous organic solvent acts as a medium through which ions involved in electrochemical reaction of a cell can move.

The non-aqueous organic solvent may be or include a carbonate-based solvent, an ester-based solvent, an ether-based solvent, a ketone-based solvent, an alcohol-based solvent, a non-amphoteric solvent, or a combination thereof.

The carbonate-based solvents may include at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvents may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvents may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include at least one of ethyl alcohol, isopropyl alcohol, and the like, and the non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolanes; and the like.

The non-aqueous organic solvent may be used alone or as a mixture thereof.

In use of the carbonate-based solvent, a mixture of a cyclic carbonate and a chained carbonate may be used, and the cyclic carbonate and the chained carbonate may be mixed in a volume ratio of 1:1 to 1:9.

The lithium salt is a substance that is soluble in an organic solvent and may be a source of lithium ions in a battery, enabling operation of a basic rechargeable lithium battery while facilitating transfer of the lithium ions between the positive electrode and the negative electrode. The lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separator

Depending on the type of rechargeable lithium battery, the separator may be interposed between the positive electrode and the negative electrode. For such a separator, polyethylene, polypropylene, polyvinylidene fluoride, or at least two layers thereof may be used as well as mixed layers, such as a polyethylene/polypropylene bilayer separator, a polyethylene/polypropylene/polyethylene trilayer separator, a polyethylene/polyethylene/polypropylene trilayer separator, and the like.

The separator may include a porous substrate and a coating layer that includes an organic material, an inorganic material, or a combination thereof on one or both surfaces of the porous substrate.

The porous substrate may be a polymer layer formed of or including a polymer such as at least one of polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, without being limited thereto.

The organic material and the inorganic material may be present in a mixed state in one coating layer, or may be present in the form of a stack structure of a coating layer including the organic material and a coating layer including the inorganic material.

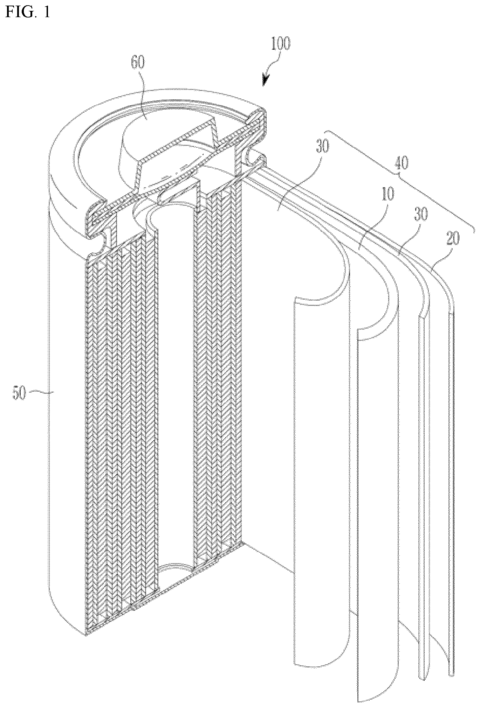

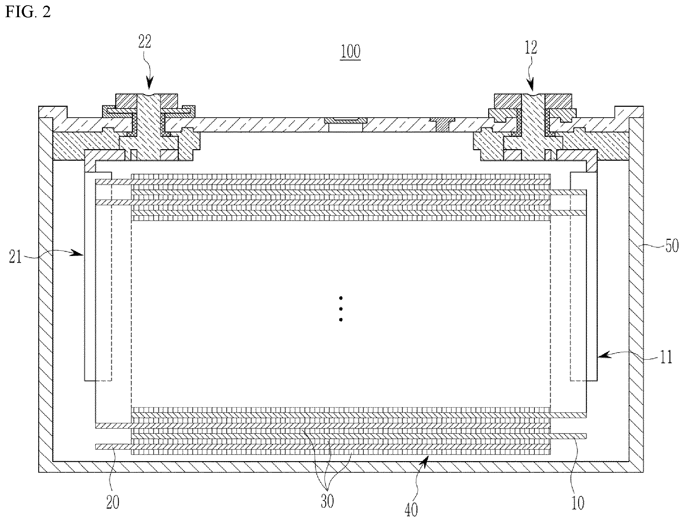

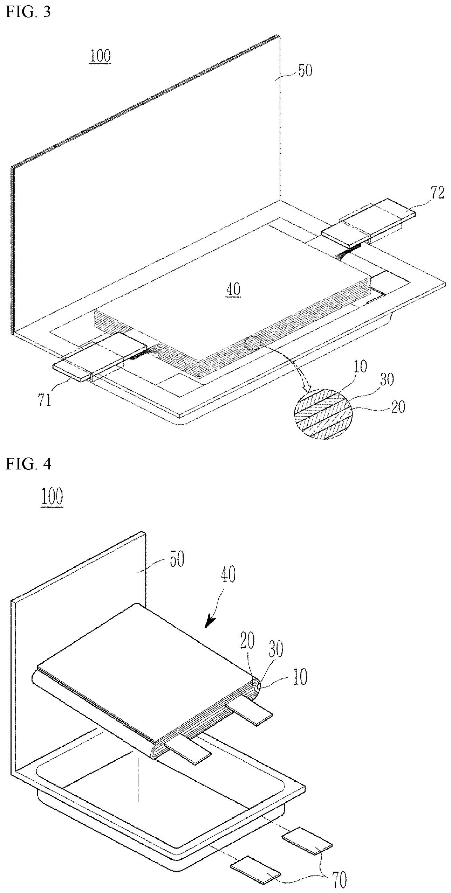

Rechargeable lithium batteries may be classified into, e.g., a cylindrical battery, a prismatic battery, a pouch type battery, a coin type battery, and the like based on the shapes thereof. FIG. 1 to FIG. 4 are schematic views of rechargeable lithium batteries, according to example embodiments of the present disclosure, in which FIG. 1 shows a cylindrical battery, FIG. 2 shows a prismatic battery, and FIG. 3 and FIG. 4 show pouch-type batteries. Referring to FIG. 1 to FIG. 4, a rechargeable lithium battery 100 may include an electrode assembly 40 in which a separator 30 is interposed between a positive electrode 10 and an negative electrode 20, and a case 50 that receives the electrode assembly 40 therein. The positive electrode 10, the negative electrode 20, and the separator 30 may be embedded in an electrolyte (not shown). The rechargeable lithium battery 100 may include a sealing member 60 that seals the case 50, as shown in FIG. 1. In addition, as shown in FIG. 2, the rechargeable lithium battery 100 may include a positive electrode lead tab 11, a positive electrode terminal 12, a negative electrode lead tab 21, and a negative electrode terminal 22. Referring to FIG. 3 and FIG. 4, the rechargeable lithium battery 100 may include electrode tabs 70 illustrated in FIG. 4, that is, a positive electrode tab 71 and a negative electrode tab 72 illustrated in FIG. 3, which constitute electrical pathways conducting current generated in the electrode assembly 40 to the outside.

Rechargeable lithium batteries according to example embodiments of the present disclosure may be used in various applications such as, e.g., automobiles, mobile phones, and/or various other electrical devices, without being limited thereto.

Next, the example embodiments are described in more detail with reference to the following examples. However, it should be understood that these examples are provided for illustration only and should not be construed in any way as limiting the invention.

### Example 1

An azo compound initiator and water were mixed with 100 parts by weight of a monomer mixture including 45 wt% of acrylic acid (AA), 40 wt% of acrylonitrile (AN), and 15 wt% of sulfobetaine (SB) (compound of Formula 1-1) based on 100 wt% of the mixture. The initiator was present in an amount of 0.2 parts by weight relative to 100 parts of the mixture.

The prepared mixture was subjected to emulsion polymerization to prepare an aqueous binder solution containing a copolymer having units derived from acrylic acid, acrylonitrile, and sulfobetaine.

### Example 2

An aqueous binder solution was prepared in the same manner as in Example 1 except that a monomer mixture of 45 wt% of acrylic acid, 40 wt% of acrylamide (AM), and 15 wt% of sulfobetaine was prepared.

### Example 3

A binder solution was prepared in the same manner as in Example 1 except that a monomer mixture of 45 wt% of acrylic acid, 40 wt% of acrylonitrile, and of 15 wt% 4-(1-vinylimidazolium) butane sulfonate (IMS) (compound of Formula 4-1) was prepared.

### Example 4

A binder solution was prepared in the same manner as in Example 1 with a difference that a monomer mixture of 45 wt% of acrylic acid, 40 wt% of acrylamide, and 15 wt% of 4-(1-vinylimidazolium) butane sulfonate was prepared.

### Examples 5 to 10

Binder solutions were prepared in the same manner as in Example 1 with a difference that the content of acrylic acid, the content of acrylonitrile, and the content of sulfobetaine in the monomer mixture were changed, as listed in Table 1.

### Comparative Examples 1 to 8

Binder solutions were prepared in the same manner as in Example 1 with a difference that the content of acrylic acid, the content of acrylonitrile, the content of sulfobetaine, and the content of 4-(1-vinylimidazolium) butane sulfonate in the monomer mixture were changed, as listed in Table 1.

**Table 1**

| | Monomer composition (wt%) | Solid content in binder solution (wt%) | Viscosity of binder solution (cP) |
|---|---|---|---|
| Example 1 | AA:AN:SB = 45:40:15 | 10.4 | 2,447 |
| Example 2 | AA:AM:SB = 45:40:15 | 9.4 | 2,105 |
| Example 3 | AA:AN:IMS = 45:40:15 | 10.5 | 1,354 |
| Example 4 | AA:AM:IMS = 45:40:15 | 11.4 | 1,530 |
| Example 5 | AA:AN:SB = 50:48:2 | 8.5 | 5,210 |
| Example 6 | AA:AN:SB = 45:45:10 | 9.1 | 4,325 |
| Example 7 | AA:AN:SB = 47:43:10 | 10.5 | 2,132 |
| Example 8 | AA:AN:SB = 40:35:25 | 12.4 | 1,540 |
| Example 9 | AA:AN:SB = 32.5:32.5:35 | 13.2 | 1,143 |
| Example 10 | AA:AN:SB = 27.5:27.5:45 | 12.1 | 580 |
| Comparative Example 1 | AA:AN = 55:45 | 7.5 | 3,210 |
| Comparative Example 2 | AA:AM = 55:45 | 10.2 | 2,145 |
| Comparative Example 3 | SB alone | Insoluble | - |
| Comparative Example 4 | IMS alone | 15.2 | 442 |
| Comparative Example 5 | AN:SB = 50:50 | Insoluble | - |
| Comparative Example 6 | AN:IMS = 50:50 | Insoluble | - |
| Comparative Example 7 | AA:SB = 50:50 | 4.2 | 120 |
| Comparative Example 8 | AA:IMS = 50:50 | 5.3 | 60 |

As shown in Table 1, the binder solutions of Comparative Examples 3 and 4, which were prepared using the third monomer alone, were not suitable, since these solutions exhibited very low viscosity, and Comparative Example 3 was insoluble. The binder solutions of Comparative Examples 7 and 8, which were prepared using the first and third monomers, were not suitable since these solutions exhibited very low viscosity. The binder solutions of Comparative Examples 5 and 6, which were prepared using the second and third monomers, were not suitable since these solutions were insoluble.

### I. Evaluation of binder as negative electrode binder

### Preparation of negative electrode

Negative electrode material slurries were prepared by mixing 97.4 wt% of an negative electrode material, 1.0 wt% of carboxymethylcellulose or the binder of each of Examples and Comparative Examples, 1.5 wt% of styrene-butadiene rubbers, and 0.1 wt% of carbon nanotubes as a conductive material. As the negative electrode material, a mixture of artificial/natural graphite and a silicon-carbon composite (mixing ratio = 90:10 by weight) was used. The silicon-carbon composite was prepared in the form of a secondary particle aggregate prepared through aggregation of artificial graphite and silicon nanoparticles and including a soft carbon coating layer formed on the surface of the aggregate. Further, the silicon-carbon composite was composed of 40 wt% of the artificial graphite, 40 wt% of the silicon nanoparticles, and 20 wt% of the soft carbon.

Negative electrodes were prepared by applying the prepared negative electrode material slurries to copper foil, followed by drying and rolling.

### Preparation of positive electrode

Positive electrode material slurries were prepared by mixing 97 wt% of LiCoNiAl as a positive electrode material, 1.5 wt% of carbon nanotubes as a conductive material, and 1.5 wt% of polyvinylidene fluoride, followed by adding water to the mixture.

Positive electrodes were prepared by applying the prepared positive electrode material slurries to aluminum foil, followed by drying and rolling.

### Preparation of rechargeable lithium battery

Rechargeable lithium batteries were prepared using the negative electrodes, the positive electrodes, a separator with an acrylic coating layer formed thereon, and an electrolyte. The electrolyte was a solution of 1.5 M LiPF₆ dissolved in a mixture of ethylene carbonate, ethyl methyl carbonate and dimethyl carbonate (volume ratio, 30:50:20).

The prepared rechargeable lithium batteries were evaluated as to the following properties and results are shown in Table 2.

### Experimental Example 1: Viscosity of Slurry (unit: cP)

For 1 g of the slurries prepared in Examples and Comparative Examples, viscosity at 25°C was measured by a flow viscometry method on a rheometer (Rheometer, Anton Paar).

### Experimental Example 2: Adhesive strength of negative electrode (unit: gf/mm)

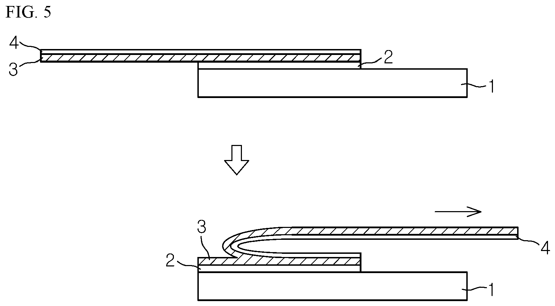

In each of the negative electrodes prepared in Examples and Comparative Examples, adhesive strength between the current collector and the negative electrode material layer was measured using a Universal Testing Machine (UTM) tensile strength tester. A sample as shown in FIG. 5 was prepared by attaching a slide glass 1 (length x width = 7 cm x 2.5 cm) to one side of a double-sided adhesive tape 2 (length x width = 4 cm x 2.5 cm), and attaching an negative electrode (3+4, 4: current collector, 3: negative electrode material layer) (length x width = 7 cm x 2.5 cm) to the other side of the double-sided adhesive tape 2. With the sample mounted on a UTM tensile strength tester, adhesive strength was measured by peeling off the negative electrode 3+4 from the slide glass 1 at a peeling angle of 180 degrees, a peeling rate of 100 mm/min and a peeling temperature of 25°. An adhesive strength to copper foil of 1.10 gf/mm or more indicates improvement in reliability of the corresponding negative electrode. An adhesive strength to aluminum foil of 0.6 gf/mm or more indicates improvement in reliability of the corresponding positive electrode.

### Experimental Example 3: Charge rate (unit: %)

The cells prepared using the binders of Examples and Comparative Examples were charged at a constant current under 1.0 C and 4.25 V cut-off conditions at 25°C. Using the maximum charge capacity of each cell reaching 4.25V in this charging method, a fraction (%) of "maximum charge capacity/full capacity of cell" was calculated and expressed as the charge rate.

### Experimental Example 4: Direct current internal resistance (DC-IR) (unit: Ω)

A cell with a cell capacity of 75 mAh prepared using each of the binders prepared in Examples and Comparative Examples was charged and discharged once by charging the cell at 25°C and at constant current/voltage under 0.2 C, 4.25 V and 0.05 C cut-off conditions, leaving the cell for 10 min., discharging the cell at a constant current under 0.33 C and 2.80 V cut-off conditions, and leaving the cell for 10 min, and direct current internal resistance (DC-IR) was measured through measurement of voltage drop (V) generated by applying a current to the cell at 1 C for 10 seconds at SoC50 (meaning that the cell is charged to 50% charge capacity at 100% full charge capacity and is 50% discharged in an under-discharge state). DC-IR is preferably 1.15 Ω or less.

### Experimental Example 5: 200-cycle life retention rate (unit: %)

Each of the cells prepared in Examples and Comparative Examples was charged at a constant current with a 0.5 C rate at 25°C until the voltage reaches 4.2 V, followed by cut-off at a 0.025 C rate in constant voltage mode. Then, the cell was discharged at a 0.5 C rate until the voltage dropped to 2.5 V. This cycle was repeated 200 times to evaluate the capacity retention rate according to the number of cycles, or lifetime characteristics.

**Table 2**

| | Negative electrode binder | | Negative electrode slurry viscosity | Adhesive strength | Charge rate | DC-IR | 200-cycle life retention rate |
|---|---|---|---|---|---|---|---|
| | Type | Content | | | | | |
| Evaluation 1 | Example 1 | 1.0 | 1,860 | 1.78 | 82.1 | 1.012 | 95.5 |
| Evaluation 2 | Example 2 | 1.0 | 1,750 | 1.89 | 81.7 | 1.025 | 96.1 |
| Evaluation 3 | Example 3 | 1.0 | 1,456 | 1.12 | 82.5 | 1.021 | 94.2 |
| Evaluation 4 | Example 4 | 1.0 | 1,650 | 1.24 | 81.7 | 1.034 | 94.1 |
| Evaluation 5 | Comparative Example 1 | 1.0 | 2,020 | 1.81 | 74.2 | 1.124 | 93.1 |
| Evaluation 6 | Comparative Example 2 | 1.0 | 2,154 | 1.94 | 72.4 | 1.21 | 92.8 |
| Evaluation 7 | Comparative Example 4 | 1.0 | 2,131 | 0.42 | 68.1 | 1.42 | - |
| Evaluation 8 | Comparative Example 9 (Carboxymeth ylcellulose) | 1.0 | 2,510 | 1.50 | 70.4 | 1.24 | 94.4 |
| Evaluation 9 | Example 5 | 1.0 | - | - | 75.1 | 1.123 | - |
| Evaluation 10 | Example 6 | 1.0 | - | - | 78.4 | 1.067 | - |
| Evaluation 11 | Example 7 | 1.0 | - | - | 81.7 | 1.034 | - |
| Evaluation 12 | Example 8 | 1.0 | - | - | 80.9 | 1.045 | - |
| Evaluation 13 | Example 9 | 1.0 | - | - | 76.7 | 1.084 | - |

| | | | | | | | |
|---|---|---|---|---|---|---|---|
| *In Table 2, "-" indicates that no measurements were taken. | | | | | | | |

As shown in Table 2, it could be seen that the electrode plates prepared using the binders of Examples 1 and 2 exhibited higher adhesive strength than the electrode plate prepared from carboxymethyl cellulose. It could be seen that the cells prepared using the binders of Examples 1 to 4 had much better charge rates and DC-IR than the cells prepared using the binders of Comparative Examples 1 to 4 and carboxymethyl cellulose. It could also be seen that the cells prepared using the binders of Examples 1 and 2 had better life retention rates than the cells using the binders of Example 3 to 4, and better capacity retention rates than the cells prepared using Comparative Example 1 to 4 and carboxymethyl cellulose.

### II. Evaluation of binder as positive electrode binder

### Preparation of negative electrodes

Negative electrode material slurries were prepared by mixing 97.4 wt% of an negative electrode material, 1.0 wt% of carboxymethylcellulose, 1.5 wt% of styrene-butadiene rubbers, and 0.1 wt% of carbon nanotubes as a conductive agent. The negative electrode material was the same as that used in Section I: Evaluation of binder.

Negative electrodes were prepared by applying the prepared negative electrode material slurries to copper foil, followed by drying and rolling.

### Preparation of positive electrode

Positive electrode material slurries were prepared by mixing 97 wt% of LFP (lithium iron phosphate, active material) as a positive electrode material, 0.8 wt% of carbon nanotubes as a conductive material, and 2.2 wt% of the binder of each of Examples and Comparative Examples, followed by adding water to the mixture. The positive electrode material was the same as that used in Section 1: Evaluation of binder.

Positive electrode material slurries were prepared by mixing 97 wt% of LFP (lithium iron phosphate, active material) as a positive electrode material, 1.0 wt% of carbon nanotubes as a conductive material, and 2.0 wt% of polyvinylidene fluoride, followed by adding NMP (1-Methyl-2-pyrrolidinone) to the mixture.

Positive electrodes were prepared by applying the prepared positive electrode material slurries to copper foil, followed by drying and rolling.

### Preparation of rechargeable lithium battery

Rechargeable lithium batteries were prepared using the negative electrodes, the positive electrodes, a separator with an acrylic coating layer formed thereon, and an electrolyte. The electrolyte was a solution of 1.5 M LiPF₆ dissolved in a mixture of ethylene carbonate, ethyl methyl carbonate and dimethyl carbonate (volume ratio, 30:50:20).

The prepared positive electrode material slurries and the rechargeable lithium batteries were evaluated as to the properties listed in Table 3. The measurement methods were the same as those described in Section I. The properties were evaluated by the same method as listed in Table 2. An adhesive strength to aluminum foil of 0.60 gf/mm or more indicates good reliability of the corresponding positive electrode.

**Table 3**

| | Positive electrode binder | | Positive electrode slurry viscosity | Adhesive strength | Charge rate | DC-IR | 200-cycle life retention rate |
|---|---|---|---|---|---|---|---|
| | Type | Content | | | | | |
| Evaluation 1 | Example 1 | 2.2 | 4,605 | 0.80 | 83.2 | 1.00 | 94.8 |
| Evaluation 2 | Example 3 | 2.2 | 3,810 | 0.62 | 82.0 | 1.02 | 90.2 |
| Evaluation 3 | Comparative Example 1 | 2.2 | 5,520 | 1.20 | 74.5 | 1.12 | 93.0 |
| Evaluation 4 | Comparative Example 2 | 2.2 | 4,821 | 0.94 | 73.1 | 1.24 | 93.2 |
| Evaluation 5 | Comparative Example 4 | 2.2 | 2,010 | Not available for electrode | - | - | - |
| Evaluation 6 | Comparative Example 10 (Polyvinylidene fluoride) | 2.2 | 6,750 | 0.84 | 70.4 | 1.24 | 94.4 |

As shown in Table 3, it could be seen that the cells prepared using the binders of Examples 1 and 3 exhibited much better properties in terms of charge rate, DC-IR and life retention than those of Comparative Examples 1 to 4 and polyvinylidene fluoride.

Although the present disclosure has been described with reference to various example embodiments and drawings, it should be understood that the present disclosure is not limited thereto and various modifications, changes, alterations, and equivalent example embodiments can be made by those skilled in the art without departing from the spirit and scope of the present invention.

## Claims

1. A binder for rechargeable lithium batteries (100), the binder comprising:
a unit derived from a (meth)acrylic monomer containing a carboxylic acid group or a carboxylic acid metal salt as a first monomer;
a unit derived from a (meth)acrylic monomer containing an amide group or a nitrile group as a second monomer; and
a unit derived from a Zwitterionic vinyl or (meth)acrylic monomer as a third monomer.

2. The binder for rechargeable lithium batteries (100) as claimed in claim 1, wherein the third monomer comprises a cationic functional group that comprises at least one of substituted or unsubstituted ammonium cations (NH₄⁺), imidazolium cations, pyrazolium cations, pyridinium cations, piperidinium cations, piperazinium cations, sulfide cations (-S⁺RR₁, R and R¹ being each independently hydrogen or a C₁ to C₁₀ alkyl group), naphthalenium cations, and guanidinium cations.

3. The binder for rechargeable lithium batteries (100) as claimed in claim 1 or 2, wherein the third monomer comprises an anionic functional group having at least one of sulfur (S), nitrogen (N), carbon (C), phosphorus (P), and oxygen (O).

4. The binder for rechargeable lithium batteries (100) as claimed in any of the claims 1 to 3, wherein the anionic functional group comprises at least one of SO₃⁻, -CO₂⁻, -O⁻-, - NR⁻, or -R₁ -O-(P=O)O⁻-O-R₂⁻-, where R is a substituted or unsubstituted C₁ to C₁₀ alkyl group or C₁ to C₁₀ haloalkyl group, or R₁ and R₂ are each independently a substituted or unsubstituted C₁ to C₁₀ alkylene group or a substituted or unsubstituted C₂ to C₁₀ alkenylene group.

5. The binder for rechargeable lithium batteries (100) as claimed in any of the claims 1 to 4, wherein the third monomer comprises at least one of a sulfobetaine monomer, a phosphobetaine monomer, a carboxybetaine monomer, and an imidazolium monomer.

6. The binder for rechargeable lithium batteries (100) as claimed in any of the claims 1 to 5, the Zwitterionic vinyl or (meth)acrylic monomer comprises at least one of a sulfobetaine monomer, a phosphobetaine monomer, and a carboxybetaine monomer,
the sulfobetaine monomer is represented by Formula 1: 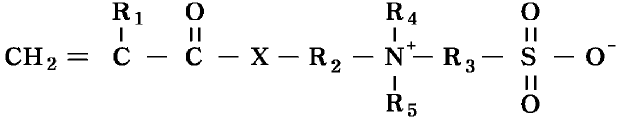
where R₁ is hydrogen or a methyl group;
X is O or NH;
R₂ and R₃ are each independently a substituted or unsubstituted C₁ to C₁₀ alkylene group, a substituted or unsubstituted C₆ to C₁₀ arylene group, or a substituted or unsubstituted C₇ to C₁₀ arylalkylene group; and
R₄ and R₅ are each independently hydrogen or a substituted or unsubstituted C₁ to C₁₀ alkyl group;
the phosphobetaine monomer is represented by Formula 2: 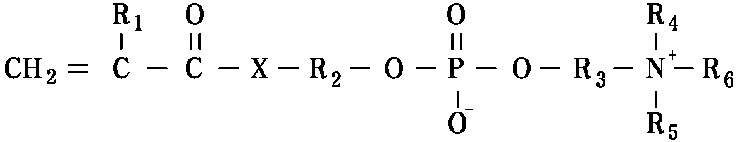
where R₁ is hydrogen or a methyl group;
X is O or NH;
R₂ and R₃ are each independently a substituted or unsubstituted C₁ to C₁₀ alkylene group, a substituted or unsubstituted C₆ to C₁₀ arylene group, or a substituted or unsubstituted C₇ to C₁₀ arylalkylene group; and
R₄, R₅, and R₆ are each independently hydrogen or a substituted or unsubstituted C₁ to C₁₀ alkyl group;
the carboxybetaine monomer is represented by Formula 3: 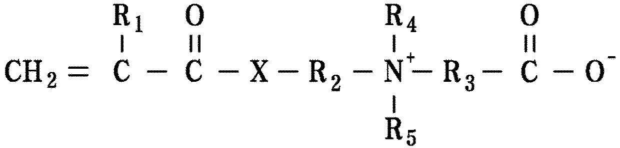
where R₁ is hydrogen or a methyl group;
X is O or NH;
R₂ and R₃ are each independently a substituted or unsubstituted C₁ to C₁₀ alkylene group, a substituted or unsubstituted C₆ to C₁₀ arylene group, or a substituted or unsubstituted C₇ to C₁₀ arylalkylene group; and
R₄ and R₅ are each independently hydrogen or a substituted or unsubstituted C₁ to C₁₀ alkyl group; and
the imidazolium monomer is represented by Formula 4: 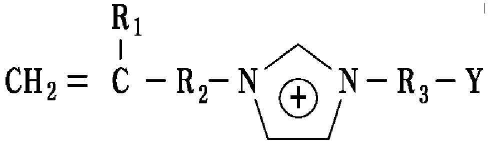
where R₁ is hydrogen or a methyl group;
R₂ and R₃ are each independently a single bond, a substituted or unsubstituted C₁ to C₁₀ alkylene group, a substituted or unsubstituted C₆ to C₁₀ arylene group, or a substituted or unsubstituted C₇ to C₁₀ arylalkylene group; and
Y is CO₂⁻, SO₃⁻, or PO₄⁻.

7. The binder for rechargeable lithium batteries (100) as claimed in any of the claims 1 to 6, wherein the third monomer comprises at least one of the compounds represented by the following formulas:

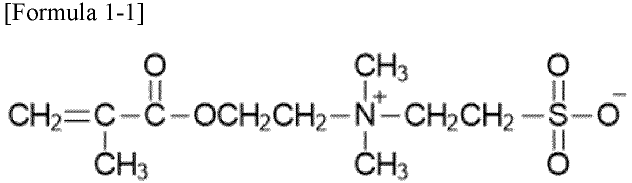

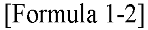

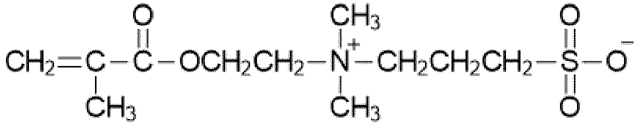

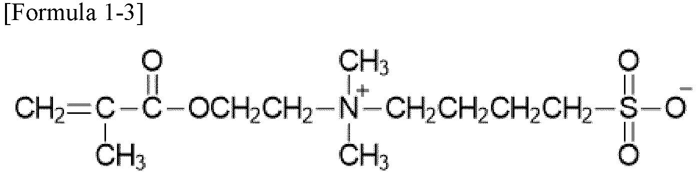

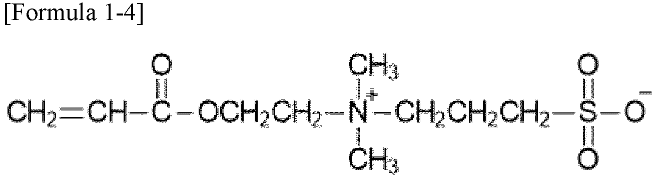

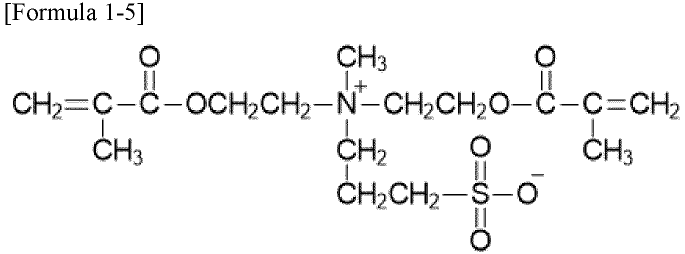

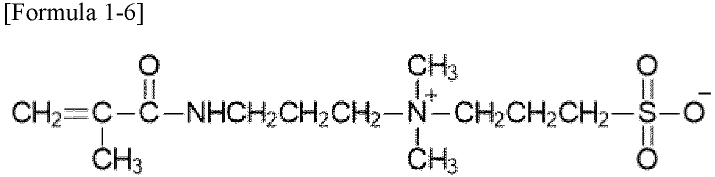

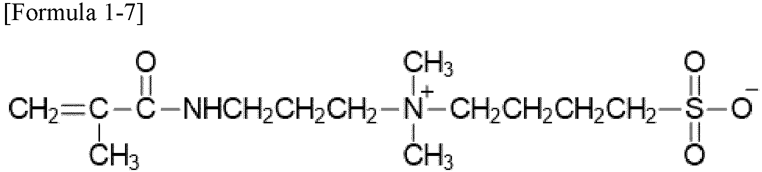

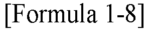

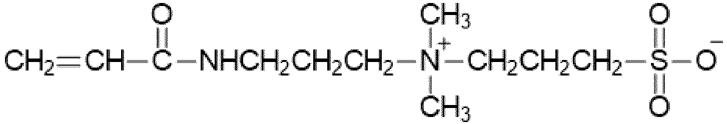

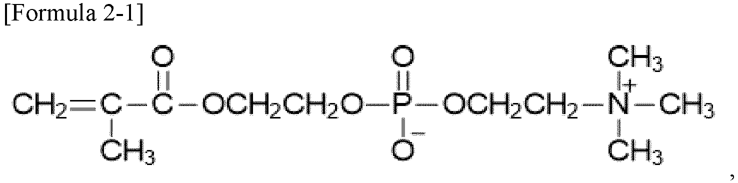

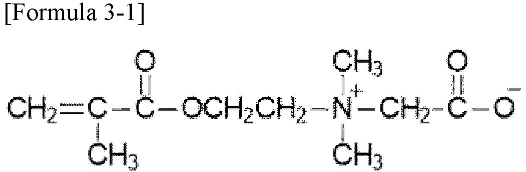

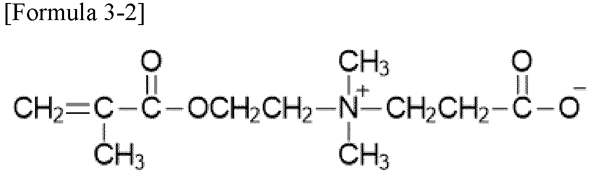

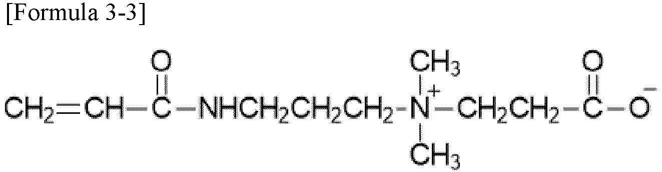

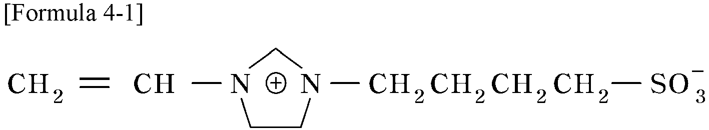

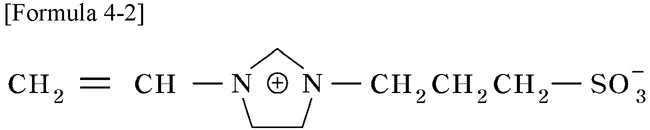

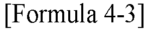

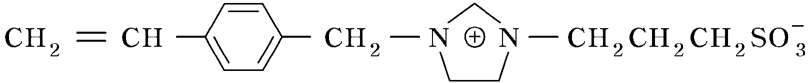

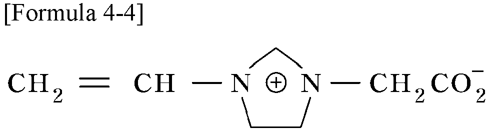

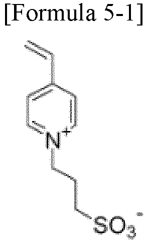

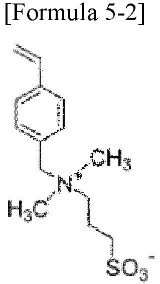

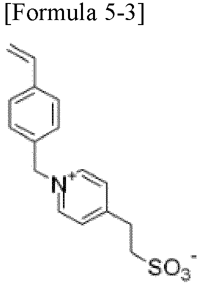

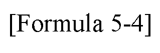

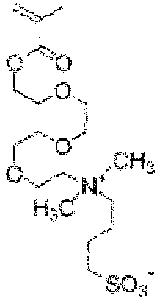

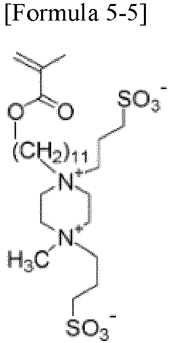

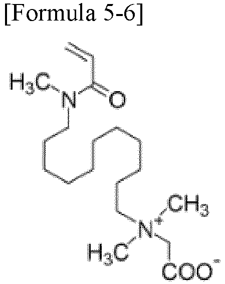

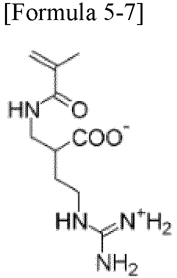

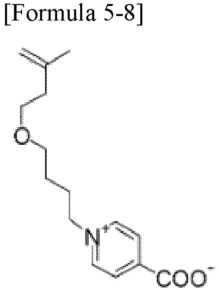

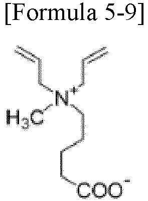

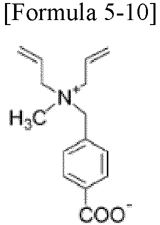

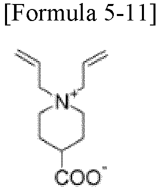

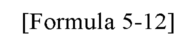

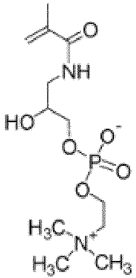

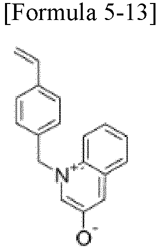

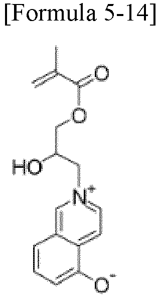

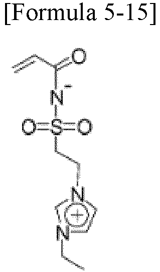

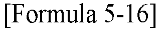

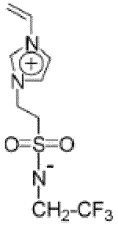

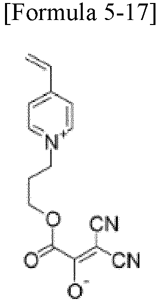

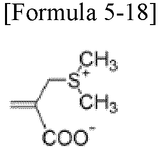

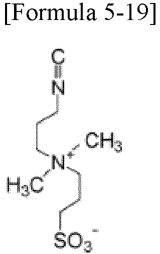

8. The binder for rechargeable lithium batteries (100) as claimed in any of the claims 1 to 7, wherein the binder comprises a copolymer of a monomer mixture comprising the first monomer, the second monomer, and the third monomer.

9. The binder for rechargeable lithium batteries (100) as claimed in any of the claims 1 to 8, wherein a concentration of the third monomer in the monomer mixture is about 2 wt% to 45 wt%.

10. The binder for rechargeable lithium batteries (100) as claimed in any of the claims 1 to 9, wherein the monomer mixture comprises about 25 wt% to 55 wt% of the first monomer, about 25 wt% to 50 wt% of the second monomer, and about 2 wt% to 45 wt% of the third monomer.

11. The binder for rechargeable lithium batteries (100) as claimed in any of the claims 1 to 10, wherein the binder has a viscosity of about 450 cP to 6,500 cP in an aqueous solution at a concentration of about v4 wt% to 15 wt%.

12. The binder for rechargeable lithium batteries (100) as claimed in any of the claims 1 to 11, further comprising a bound lithium salt.

13. The binder for rechargeable lithium batteries (100) as claimed in any of the claims 1 to 12, wherein the lithium salt comprises at least one of LiCl, LiPF₆, LiTFSI, LiFSI, LiBF₄, and LiClO₄.

14. A rechargeable lithium battery (100) comprising:
a negative electrode (20) comprising the binder for rechargeable lithium batteries (100) as claimed in any of the claims 1 to 13;
a positive electrode (10); and
an electrolyte.

15. A rechargeable lithium battery (100) comprising:
a positive electrode (10) comprising the binder for rechargeable lithium batteries (100) as claimed in any of the claims 1 o 13;
a negative electrode (20); and
an electrolyte.
